Europäisches Patentamt

European Patent Office

Office européen des brevets

(19)

(11) Veröffentlichungsnummer : **0 100 781**
**B1**

(12) **EUROPÄISCHE PATENTSCHRIFT**

(45) Veröffentlichungstag der Patentschrift :
**16.04.86**

(21) Anmeldenummer : **82107313.7**

(22) Anmeldetag : **12.08.82**

(51) Int. Cl.⁴ : **G 02 B 6/38, B 23 Q 1/14**

(54) **Justagevorrichtung für einen Lichtwellenleiter.**

(43) Veröffentlichungstag der Anmeldung :
**22.02.84 Patentblatt 84/08**

(45) Bekanntmachung des Hinweises auf die Patenterteilung : **16.04.86 Patentblatt 86/16**

(84) Benannte Vertragsstaaten :
**DE FR GB NL**

(56) Entgegenhaltungen :
**GB-A- 2 062 508**
**US-A- 4 147 405**
**PATENTS ABSTRACTS OF JAPAN, Band 6, Nr. 38 (P-105) (916), 9. März 1982, Seite 115P105**

(73) Patentinhaber : **AEG - TELEFUNKEN Nachrichtentechnik GmbH**
**Gerberstrasse 33**
**D-7150 Backnang (DE)**

(72) Erfinder : **Blume, Georg, Dipl.-Ing.**
**Auf dem Hagenbach 60**
**D-7150 Backnang (DE)**
Erfinder : **Franke, Ludwig**
**Hörschbachstrasse 63**
**D-7157 Murrhardt (DE)**

(74) Vertreter : **Schickle, Gerhard, Dipl.-Ing. et al**
**AEG-TELEFUNKEN Nachrichtentechnik GmbH K1 E7**
**Gerberstrasse 33**
**D-7150 Backnang (DE)**

## Beschreibung

Die vorliegende Erfindung betrifft eine Justagevorrichtung für einen Lichtwellenleiter, wobei dieser in einem von einem äußeren Tragrahmen gehaltenen Federelement angeordnet ist und Einrichtungen vorhanden sind, mit denen auf das Federelement in zwei orthogonalen Richtungen senkrecht zur Lichtwellenleiterachse ein in seiner Stärke einstellbarer Druck ausgeübt werden kann, wodurch der Lichtwellenleiter in einer Ebene senkrecht zu dessen Längsachse Positionsänderungen erfährt.

Soll ein Lichtwellenleiter mit einem optischen Sende- oder Empfangselement, einer Fokussierlinse oder einem anderen Lichtwellenleiter gekoppelt werden, so besteht die Forderung, daß die optisch wirksamen Flächen so genau wie möglich aufeinander ausgerichtet werden, um die Übergangsdämpfung minimal zu halten. Zu diesem Zweck sind sehr präzise arbeitende Justagevorrichtungen erforderlich.

Aus der DE-PS 24 53 413 ist eine Justage-vorrichtung bekannt, bei der der zu justierende Lichtwellenleiter in einem Körper aus elastischem Stoff, z. B. Gummi, liegt. Durch Druck von verschiedenen Seiten auf den in einem äußeren Trägerrahmen untergebrachten Körper verformt sich dieser. Mit der Verformung verlagert sich auch der Lichtwellenleiter in eine vom Druck auf den elastischen Körper abhängigen Richtung.

Wegen der plastischen Masse, in der der Lichtwellenleiter eingebettet ist, besteht nur ein sehr indirekter Kontakt zwischen dem Lichtwellenleiter und den auf die Masse einwirkenden schraubbaren Druckstempeln. Daher ist eine definierte Positionierung des Lichtwellenleiters über den auf die plastische Masse ausgeübten Druck nur schwerlich möglich. Außerdem verleiht die plastische Masse dem Lichtwellenleiter nur eine bedingt gefestigte Position. Vor allem besteht die Gefahr, daß nach längerer Zeit der Lichtwellenleiter im plastischen Körper aus der justierten Lage wieder herauswandert.

Bei einer aus der japanischen Patentschrift JP-A-56-156812 bekannten Justiervorrichtung für einen Lichtwellenleiter ist dieser auf einem Träger befestigt, der über zwei getrennte Blattfedern schwenkbar gelagert ist. Die beiden Blattfedern sind über einen freischwingenden Ausleger derart miteinander gekoppelt, daß eine Blattfeder in axialer Richtung des zu justierenden Lichtwellenleiters und die andere Blattfeder senkrecht zur Lichtwellenleiterachse schwenkbar ist. Dies hat den Nachteil, daß die Stirnfläche des Lichtwellenleiters beim Verbiegen der Blattfern eine dreidimensionale Bewegung ausübt. Demzufolge liegen die Punkte, welche durch diese Art der Justierung für die Lichtwellenleiterstirnfläche erreichbar sind, innerhalb einer in sich gekrümmten Fläche. Eine genauer definierte Ausrichtung des Lichtwellenleiters auf ein gegenüberstehendes optisches Element ließe sich nur verwirklichen, wenn die Lichtwellenleiterstirnfläche nur innerhalb einer ebenen Fläche verschiebbar wäre, welche senkrecht zu dem optischen Element ausgerichtet ist.

Der Erfindung liegt daher die Aufgabe zugrunde, eine Justiervorrichtung der eingangs genannten Art anzugeben, mit der einem Lichtwellenleiter eine genau definierte und gefestigte Position verliehen werden kann, die auch auf lange Zeit unverändert erhalten bleibt.

Die Aufgabe wird erfindungsgemäß dadurch gelöst, daß das Federelement ein L-förmiges Winkelstück ist, dessen einer Schenkel mit seinem Ende an dem Tragrahmen befestigt ist und dessen anderer Schenkel am freien Ende eine Bohrung zur Aufnahme des Lichtwellenleiters besitzt, und daß an jeden der beiden Schenkel eine Druck ausübende Einrichtung angreift.

Zweckmäßige Ausführungen der Erfindung gehen aus den Unteransprüchen hervor.

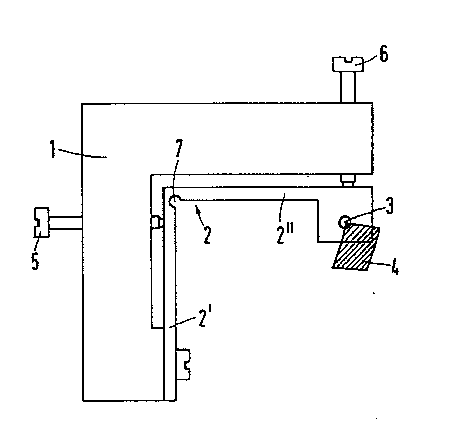

Anhand eines in der Zeichnung dargestellten Ausführungsbeispiels wird nun die Erfindung näher erläutert.

Die Figur zeigt eine Justiervorrichtung, bestehend aus einem L-förmigen Tragrahmen 1 und einem daran befestigten federnden Winkelstück 2, das ebenfalls L-förmig ist.

Das Winkelstück 2 besteht aus zwei Schenkeln 2' und 2''. Es ist nur an einem Punkt, und zwar mit dem äußersten Ende des Schenkels 2' mit dem Trägerrahmen fest verbunden. Der andere Schenkel 2'' ist an seinem freien Ende mit einer Bohrung 3 zur Aufnahme eines Lichtwellenleiters versehen. Der Lichtwellenleiter kann zusätzlich noch in einem Kapillarrohr, das in die Bohrung eingeführt wird, gehalten werden. Dadurch, daß sich der Befestigungspunkt und die Aufnahme des Lichtwellenleiters an den weit entferntesten Punken des Winkelstücks befinden, ist die Ebene, die die Stirnfläche des Lichtwellenleiters beim Durchbiegen eines oder beider Schenkel überstreicht, maximal. Die Größe dieser Ebene 4, welche in der Figur schraffiert eingezeichnet ist, hängt ab von der Länge der Schenkel 2', 2'' und deren Elastizität.

Die Durchbiegung jedes einzelnen Schenkels läßt sich durch zwei durch den Trägerrahmen geführte Schrauben 5 und 6 einstellen. Es ist zweckmäßig, die Schraube 5, welche auf den einseitig fixierten Schenkel 2' drückt, in der Nähe der Winkelecke und die auf den anderen Schenkel 2'' drückende Schraube 6 am den Lichtwellenleiter aufnehmenden Ende 2'' anzuordnen. Somit ist eine optimale, zwei Freiheitsgrade aufweisende Justage des Lichtwellenleiters möglich.

Eine Materialschwächung 7 in der Winkelecke und/oder unterschiedliche Elastizitäten der Schenkel führen dazu, daß beim Durchbiegen des Schenkels 2'' der andere Schenkel 2' nahezu keiner Biegebeanspruchung unterworfen wird. D. h. jedem Schenkel kann fast unabhängig vom anderen ein Positionierschritt des Lichtwellenleiters in eine definierte Richtung zugeordnet werden.

Das optische Sende- oder Empfangselement, die Linse und der Lichtwellenleiter, worauf der in die Justiervorrichtung eingesetzte Lichtwellenleiter ausgerichtet werden soll, ist entweder in einer festen Position am Tragrahmen fixiert.

Oder beide miteinander zu koppelnde optischen Elemente sind in je eine der oben beschriebenen Justiervorrichtungen, deren Tragrahmen miteinander verbunden sind, eingesetzt.

**Patentansprüche**

1. Justagevorrichtung für einen Lichtwellenleiter, wobei dieser in einem von einem äußeren Trägerrahmen gehaltenen Federelement angeordnet ist und Einrichtungen vorhanden sind, mit denen auf das Federelement in zwei orthogonalen Richtungen senkrecht zur Lichtwellenleiterachse ein in seiner Stärke umstellbarer Druck ausgeübt werden kann, wodurch der Lichtwellenleiter in einer Ebene senkrecht zu dessen Längsachse Positionsänderungen erfährt, dadurch gekennzeichnet, daß das Federelement ein L-förmiges Winkelstück (2) ist, dessen einer Schenkel (2') mit seinem Ende an dem Tragrahmen (1) befestigt ist und dessen anderer Schenkel (2") am freien Ende eine Aufnahme (3) für den Lichtwellenleiter besitzt, und daß an jeden der beiden Schenkel eine Druck ausübende Einrichtung (5, 6) angreift.

2. Justagevorrichtung nach Anspruch 1, dadurch gekennzeichnet, daß eine der auf das Winkelstück (2) Druck ausübenden Einrichtungen (6) am den Lichtwellenleiter tragenden Ende des einen Schenkels (2") und die andere (5) an dem anderen Schenkel (2') nahe bei der Winkelecke angreift.

3. Justagevorrichtung nach einem der vorhergehenden Ansprüche, dadurch gekennzeichnet, daß die auf die Schenkel (2', 2") Druck ausübenden Einrichtungen Schrauben (5, 6) sind, die durch den äußeren Tragrahmen (1) geführt sind.

4. Justagevorrichtung nach Anspruch 1, dadurch gekennzeichnet, daß das Winkelstück (2) in der Winkelecke eine Schwächung (7) des Materials aufweist.

5. Justagevorrichtung nach Anspruch 1, dadurch gekennzeichnet, daß die beiden Schenkel (2', 2") des Winkelstücks (2) unterschiedliche Elastizität aufweisen.

6. Justagevorrichtung nach Anspruch 1, dadurch gekennzeichnet, daß der Schenkel (2") an seinem freien Ende eine Bohrung (3) aufweist, in dem der Lichtwellenleiter gelagert ist.

7. Justagevorrichtung nach Anspruch 6, dadurch gekennzeichnet, daß der Lichtwellenleiter in einem Kapillarrohr gehalten ist, das in der Bohrung (3) gelagert ist.

**Claims**

1. Adjusting device for a light wave conductor, wherein this is arranged in a spring element held by an outer carrier element and equipments are present, by which a pressure resettable in its strength can be exerted on the spring element in two orthogonal directions perpendicular to the axis of the light wave conductor, whereby the light wave conductor experiences changes in position in a plane parallel to its longitudinal axis, characterised thereby, that the spring element is an L-shaped angle piece (2), the one limb (2') of which is fastened by its one end at the carrier frame (1) and the other limb (2") of which at the free end possesses a receptacle (3) for the light wave conductor, and that an equipment (5, 6) exerting a pressure engages at each of both the limbs.

2. Adjusting device according to claim 1, characterised thereby, that one of the equipments (6) exerting pressure on the angle piece (2) engages at that end of the one limb (2"), which carries the light wave conductor and the other (5) at the other limb (2') near to the corner of the angle.

3. Adjusting device according to one of the preceding claims, characterised thereby, that the equipments (5, 6) exerting pressure on the limbs (2', 2") are screws (5, 6), which are led through the outer carrier frame (1).

4. Adjusting device according to claim 1, characterised thereby, that the angle piece (2) displays a weakening of the material in the corner of the angle.

5. Adjusting device according to claim 1, characterised thereby, that both the limbs (2', 2") of the angle piece (2) display different elasticity.

6. Adjusting device according to claim 1, characterised thereby, that the limb (2") at its free end displays a bore (3), in which the light wave conductor is borne.

7. Adjusting device according to claim 6, characterised thereby, that the light wave conductor is held in a capillary tube which is borne in the bore (3).

**Revendications**

1. Dispositif d'ajustement pour un guide d'ondes lumineuses, dans lequel ce guide est disposé dans un élément élastique maintenu par un cadre support extérieur et des organes sont prévus pour exercer sur l'élément élastique une pression, dont l'intensité est réglable, suivant deux directions orthogonales perpendiculairement à l'axe du guide d'ondes lumineuses, ce qui confère au guide d'ondes lumineuses des changements de position dans un plan perpendiculaire à son axe longitudinal, caractérisé en ce que l'élément élastique est une équerre en L (2) dont une branche (2") est fixée par son extrémité au cadre support (1) et dont l'autre branche (2") possède à l'extrémité libre une réception (3) pour le guide d'ondes lumineuses, et qu'un organe (5, 6) exerçant une pression attaque chacune des deux branches.

2. Dispositif selon la revendication 1, caractérisé en ce que l'un des organes (6) exerçant une pression sur l'équerre (2) attaque l'extrémité portant le guide d'ondes lumineuses d'une branche (2″) et l'autre organe (5) attaque l'autre branche (2′) près de l'angle de l'équerre.

3. Dispositif selon une des revendications précédentes, caractérisé en ce que les organes exerçant une pression sur les branches (2′, 2″) sont des vis (5, 6) qui sont guidées à travers le cadre support extérieur (1).

4. Dispositif selon la revendication 1, caractérisé en ce que l'équerre (2) présente un affaiblissement (7) du matériau dans l'angle de l'équerre.

5. Dispositif selon la revendication 1, caractérisé en ce que les deux branches (2′, 2″) de l'équerre (2) présentent des élasticités différentes.

6. Dispositif selon la revendication 1, caractérisé en ce que la branche (2″) portant le guide d'ondes lumineuses présente à son extrémité libre un perçage (3) dans lequel est monté ce guide.

7. Dispositif selon la revendication 6, caractérisé en ce que le guide d'ondes lumineuses est maintenu dans un tube capillaire monté lui-même dans le perçage (3).